# EUROPEAN PATENT APPLICATION

(11) **EP 3 396 855 A1**
(43) Date of publication of application: **31.10.2018**
(21) Application number: 17168076.2
(22) Date of filing: 25.04.2017
(51) Int. Cl.: H02S 20/32

(54) **LIGHT-TRACKING APPARATUS AND METHOD**

(71) Applicant: Vestel Elektronik Sanayi ve Ticaret A.S., 45030 Manisa (TR)
(72) Inventor: ÖZKÜCÜK, Serhat, 45030 Manisa (TR); ÖZEN, Erol, 45030 Manisa (TR)
(74) Representative: Ascherl, Andreas

(57) **Abstract**

The present invention provides a light-tracking apparatus (10). The light-tracking apparatus (10) at least comprises an array (12) of photodetectors (14), a plurality of electromagnets (16) and a movable weight (18). The electromagnets (16) are each electrically connected to a respective subset of the photodetectors (14) in the array (12) and are able to produce a magnetic field from an electric current generated by the respective subset of the photodetectors to which they are connected, in response to light falling on that respective subset. The weight (18), which can be magnetically influenced by the electromagnets (16) and which is preferentially movable towards one or more of them according to the relative strengths of their respective magnetic fields, is mechanically coupled to the array (12) of photodetectors (14) and is arranged to change an orientation of the array of photodetectors in response to its movement. Thus the array (12) of photodetectors can be caused to track a moving light source by movement of the weight (18), without any need for an external source of power. The present invention also provides a corresponding method of tracking a light source. The array may be caused to turn towards or away from the light source according to the particular set-up of the light-tracking apparatus (10).

## Description

The present invention relates to a light-tracking apparatus according to claim 1 and a method of tracking a light source according to claim 12.

### Background of the Invention

Light-tracking apparatuses are known in the prior art. These can be used for changing the orientation of a light-gathering apparatus so that it can follow a moving light source, for example so that the orientation of a light-gathering mirror can be changed to follow the movement of the sun. However, these known light-tracking apparatuses generally suffer from various disadvantages, in that they may require sensors to detect the orientation, and possibly also movement, of the light-gathering apparatus, as well as one or more motors to change the orientation of the light-gathering apparatus, which in turn require their own power supply in order to operate. An example of such a light-tracking apparatus is described in US 2011/0030672. In this prior art document, a solar collection apparatus uses a light-tracking apparatus comprising accelerometers and sensors of the earth's magnetic field to determine the movement and orientation of the light-gathering apparatus and motors or other drive mechanisms to change the orientation of the solar collection apparatus.

### Object of the Invention

It is therefore an object of the invention to provide a light-tracking apparatus and a method of tracking a light source.

### Description of the Invention

The object of the invention is solved by a light-tracking apparatus according to claim 1. The light-tracking apparatus at least comprises an array of photodetectors, at least two electromagnets, and a movable weight. The at least two electromagnets are each electrically connected to a respective subset of the photodetectors in the array and are able to produce a magnetic field from an electric current generated by the respective subset of the photodetectors in response to light falling thereon. The movable weight can be magnetically influenced by the at least two electromagnets and preferentially moved towards one of the electromagnets according to the relative strengths of their respective magnetic fields. The movable weight is also mechanically coupled to the array of photodetectors and is arranged to change an orientation of the array of photodetectors in response to its movement.

As used herein, the term "light" means electromagnetic radiation, and therefore encompasses not just light from the visible part of the electromagnetic spectrum, but also light of other wavelengths, such as infrared radiation. The apparatus of the invention may therefore also be used as a heat-tracking apparatus in the case of infrared radiation, for example.

This solution is beneficial because it allows a light source to be tracked by the apparatus without the need of any additional sensors, apart from the photodetectors themselves, to detect the orientation of the light-tracking apparatus and without the need of any motors to change the orientation of the light-tracking apparatus, which also means that the orientation of the light-tracking apparatus can be changed without the need for any external power supply. Moreover, depending on how the movable weigh is magnetically influenced by the at least two electromagnets and how the movable weight is mechanically coupled to the array of photodetectors, the orientation of the light-tracking apparatus can be changed either to turn towards and/or follow a moving light source or to turn away from and/or avoid a light source, according to requirements.

Advantageous embodiments of the invention may be configured according to any claim and/or part of the following description.

In one possible preferred embodiment, the movable weight may comprise a ferromagnetic material, such as iron or cobalt. In such a case, the movable weight can be magnetically attracted by the at least two electromagnets. In alternative possible embodiments, however, the movable weight may instead comprise a diamagnetic material or a permanent magnet, either of which can be magnetically repelled by the at least two electromagnets.

In another possible preferred embodiment, the movable weight may be mechanically coupled to the array of photodetectors by contact with an upper surface of the array. In such a case, the weight can bear down on the upper surface of the array under gravity and change its orientation by pushing upon it. This solution is beneficial because of its mechanical simplicity.

In an alternative possible preferred embodiment, the movable weight may instead be mechanically coupled to the array of photodetectors by being suspended beneath the array. This solution may be mechanically less simple, but is beneficial because it does not obstruct or reduce the light-receiving capacity of the photodetectors in the array and also allows for a greater range of possible motions of the weight relative to the array.

Preferably, the movable weight is constrained to move along a predetermined path. This is advantageous because the possible movements of the array of photodetectors may thereby also be controlled accordingly.

In one possible preferred embodiment, the predetermined path may be rectilinear. This can allow for a one-dimensional movement of the array as desired, according to the predetermined path, for example by rotation of the array through an angle about a polar coordinate.

In an alternative possible preferred embodiment, however, the predetermined path may be contained within a two-dimensional plane. This solution is beneficial because it allows for a two- dimensional movement of the array as desired, according to the predetermined path, for example by tilting of the array in two different directions, either sequentially or simultaneously.

In another possible alternative embodiment, the predetermined path may occupy a three-dimensional space. This solution is beneficial because it allows for a corresponding three-dimensional movement of the array as desired, according to the predetermined path, for example by translation of the array along a vertical axis, as well as by tilting of the array in two different directions.

In a preferred embodiment, the light-tracking apparatus further comprises a mount supporting the array of photodetectors and connected thereto via a movable joint, wherein the joint preferentially adopts any one of a plurality of discrete different angles relative to the mount. Each of the angles corresponds to one of a plurality of different orientations of the array. The movable weight can exert a variable torque, T, on the joint, the size of which determines which one of the different angles the joint adopts relative to the mount. This solution is beneficial because it allows the movement of the weight to change the orientation of the array of photodetectors in response to its movement by discreet amounts as well, which can be more closely matched to track the motion of a light source than if the moving weight were to tilt the array of photodetectors entirely in one direction or another. It also ensures that the array is not constantly in motion, which would undesirably continuously consume electrical power, and reduces wear and tear on its mechanical components.

The light-tracking apparatus in such an embodiment may further comprise control electronics electrically connected both to the joint to receive therefrom an indication of the angle adopted by the joint relative to the mount, as well as to each respective subset of the photodetectors in the array to receive from them an indication of which subset of the photodetectors is generating the largest electric current in response to light falling thereon. In such a case, the control electronics is also electrically connected to each of the electromagnets to control a strength of the magnetic field generated by a respective one of the electromagnets in dependence on a comparison between the indication received from the joint and the indication received from each respective subset of the photodetectors. This solution is advantageous because it allows the processor to control the motion of the weight with the electromagnets and to guide the weight from one electromagnet to another.

Preferably, the respective magnetic fields of the at least two electromagnets each provide a respective potential energy well for the movable weight which are separated from each other by a potential energy barrier. The potential energy barrier may be provided in one of several different possible ways, such as by a ridge or mechanical restriction in the predetermined path of the movable weight. This solution is beneficial because in such a case, the weight will only be able to move from one of the potential energy wells to the other if it is able to surmount the potential energy barrier. This can be used to ensure that the weight will only be able to change the orientation of the array of photodetectors if the magnetic force or forces acting on the weight reach a predetermined threshold value, which is greater than the potential energy barrier.

Preferably, each subset of the photodetectors in the array comprises a plurality of said photodetectors electrically connected in parallel. This solution is beneficial because it increases the electrical current supplied to each of the electromagnets, thereby also increasing the strength of the magnetic field produced by each electromagnet, in comparison to that which would be produced by connecting each electromagnet to only a single photodetectors or to a plurality of such photodetectors connected in series. Nonetheless, different pluralities of photodetectors connected in parallel may also be connected to each other in series, in order to increase the overall voltage output from the photodetectors, as required.

In one possible preferred embodiment, the photodetectors are photovoltaic cells. In other possible alternative embodiments, however, the photodetectors may instead comprise photodiodes and/or phototransistors.

The present invention also relates to a method of tracking a light source. The method at least comprises detecting light from the light source with photodetectors located in at least two different locations, producing respective magnetic fields from a current generated by the photodetectors in each of the at least two different locations in response to light falling on the photodetectors, magnetically influencing a movable weight with the respective magnetic fields, preferentially moving the weight towards one of the respective magnetic fields according to the relative strengths of the respective magnetic fields, mechanically coupling the movable weight to the photodetectors, and changing an orientation of the photodetectors in response to movement of the weight.

With this method, the photodetectors can therefore be moved relative to the light source as desired. The respective strengths of the magnetic fields may, for example, be proportional to the amount of light detected from the light source by the photodetectors at each of the at least two different locations. Thus the orientation of the photodetectors can also be changed in proportion to the amount of light falling on them.

Preferably, the method further comprises causing the photodetectors to preferentially adopt any one of a plurality of discrete different orientations in response to movement of the weight. This solution is beneficial because it prevents the continuous consumption of electrical power when tracking a moving light source, instead only consuming a small amount of electrical power each time that the photodetectors adopt a new one of the plurality of discrete different orientations in response to movement of the weight.

The method may further comprise determining a current orientation of the photodetectors, determining a desired orientation of the photodetectors from the respective currents generated by the photodetectors in response to light falling on them, and controlling the relative strengths of the respective magnetic fields based on a comparison between the current orientation and the desired orientation of the photodetectors. This is advantageous because it allows the respective magnetic fields to be used to direct the movement of the weight as desired, especially against the force of gravity.

Preferably, changing the orientation of the photodetectors in response to movement of the weight comprises increasing the orientation of the photodetectors towards the light source. This solution may be beneficial when it is desirable to increase the amount of irradiation of the photodetectors by the light source as far as possible, for example in order to generate electrical power or to detect an optical signal from a moving light source. In an alternative possible embodiment of the method, however, changing the orientation of the photodetectors in response to movement of the weight may instead comprise increasing the orientation of the photodetectors away from the light source. This solution may be beneficial when it is desirable to reduce the amount of irradiation of the photodetectors by the light source as far as possible, for example in order to protect something associated with the photodetectors from harmful irradiation by excessive light or heat which could otherwise lead to its damage, by causing it to "turn its back on" the light source. The method of the invention therefore encompasses both positive and negative feedback mechanisms as alternative possible embodiments thereof.

Preferably, the method further comprises constraining the movable weight to move along a predetermined path. This solution is beneficial because it allows the orientation of the photodetectors to be controlled according to the shape of the predetermined path.

In one possible preferred embodiment, the method may further comprise separating the respective magnetic fields by a potential energy barrier for the movable weight to surmount. This solution is beneficial because it can be used to restrict movement of the weight until a predetermined threshold for its movement has been reached.

The present invention further relates to a computer program product or a program code or system for executing one or more than one of the herein described methods.

Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a schematic side view of an embodiment of a light-tracking apparatus;
Fig. 2 is a graph, plotting potential energy against angular displacement of a movable joint of the light tracking apparatus of Fig. 1, and plotting torque against linear displacement of a weight of the light tracking apparatus of Fig. 1, schematically representing one example of how the joint may be moved in response to movement of the weight;
Fig.3 is a schematic side view showing a first stage in how the light tracking apparatus of Fig. 1 reacts to unequal irradiation;
Fig. 4 is a schematic side view showing a second stage in how the light tracking apparatus of Fig. 1 reacts to unequal irradiation;
Fig. 5 is a schematic side view showing how the light tracking apparatus of Fig. 1 reacts to movement of a light source;
Fig. 6 is a schematic side view of the light tracking apparatus of Fig. 1, schematically showing control electronics therefor in more detail;
Fig. 7 is a graph, plotting magnetic flux against time, schematically representing one example of how the control electronics of Fig. 6 may control the light tracking apparatus of Fig. 1; and
Figs. 8A and 8B are two graphs, each plotting potential energy against linear displacement, schematically representing two potential energy wells separated from each other by a potential energy barrier.

### Detailed Description

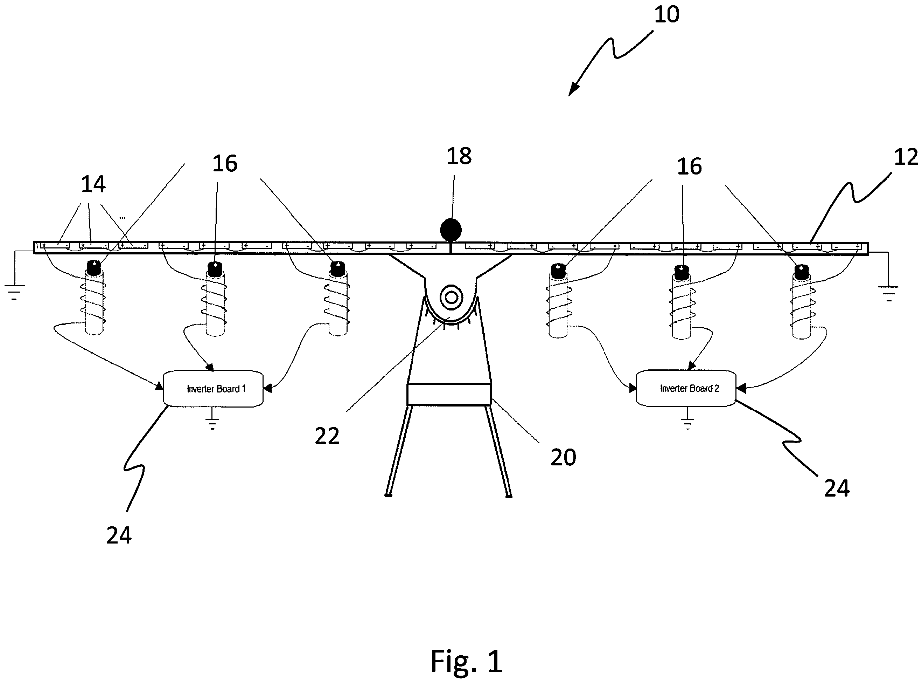

Fig. 1 schematically shows an embodiment of a light-tracking apparatus 10. The light-tracking apparatus 10 comprises an array 12 of photodetectors 14, a plurality of electromagnets 16 and a movable weight 18. The array 12 is supported on a mount 20 and is connected thereto via a movable joint 22. In this embodiment, the photodetectors 14 are all photovoltaic cells arranged in a plane as a flat-panel array 12. The electromagnets 16 are each electrically connected to a respective subset of the photodetectors 14 in the array 12, as well as to control electronics 24. The electromagnets 16 are therefore able to produce a magnetic field from an electric current generated by the respective subset of the photodetectors 14 to which they are connected, in response to light falling on that respective subset. The control electronics 24 draw their own power parasitically from the array 12 of photodetectors 14 as well.

Each subset of the photodetectors 14 in the array 12 comprises a plurality of said photovoltaic cells which are electrically connected in parallel. This increases the electrical current which can be supplied to each of the electromagnets 16, thereby also increasing the strength of the magnetic field which each electromagnet can produce, in comparison to that which would be produced by connecting each electromagnet to only a single photovoltaic cell or to a plurality of such photovoltaic cells connected in series.

In the illustrated embodiment, the electromagnets 16 are positioned beneath the flat-panel array 12 in respective locations which correspond to the respective locations of the subsets of the photodetectors in the array 12 which they are electrically connected to. However, in other possible alternative embodiments, the electromagnets could instead be positioned in other, different locations, according to requirements. In other words, the respective locations of the electromagnets 16 are not determined by the respective locations of the photodetectors 14.

The movable weight 18 comprises a ferromagnetic material, which can be magnetically attracted by the plurality of electromagnets 16 and which can therefore be preferentially moved towards one of the electromagnets 16 according to the relative strengths of their respective magnetic fields. In this case, the weight 18 is preferentially moved towards the strongest of the magnetic fields. In an alternative possible embodiment, however, the movable weight 18 could instead comprise a diamagnetic material, which can be magnetically repelled by the plurality of electromagnets 16 and which can therefore be preferentially moved towards one of the electromagnets 16 according to the relative strengths of their respective magnetic fields. In this latter case, the weight 18 is instead preferentially moved towards the weakest of the magnetic fields.

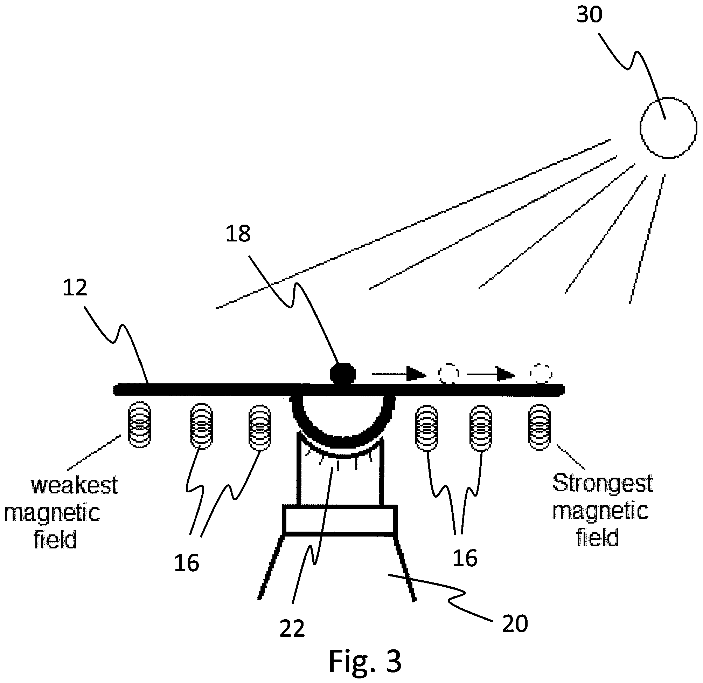

The movable weight 18 is mechanically coupled to the array 12 of photodetectors 14 by contact with an upper surface of the array 12, although in an alternative possible embodiment of the light-tracking apparatus, it could instead be mechanically coupled to the array 12 of photodetectors 14 by being suspended beneath the array 12. The movable weight 18 is arranged to change an orientation of the array 12 of photodetectors 14 in response to movement of the weight 18, in a manner which will be described in greater detail below in relation to Figs. 3 to 8.

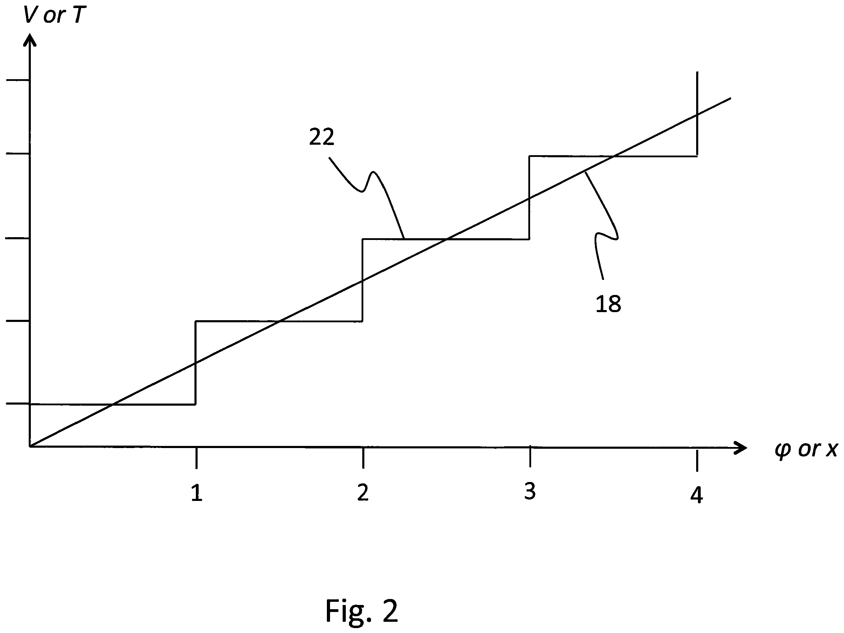

The array 12 is supported on a mount 20 and is connected thereto via a movable joint 22, so that the array 12 may adopt one of several different orientations whilst the mount 20 remains static. However, the joint 22 is not smoothly and continuously movable, but instead preferentially adopts one or another of a plurality of discrete different angles relative to the static mount 20, each of which corresponds to one of the plurality of different orientations of the array 12. The joint 22 can move between these discrete different angles, but in order to do so, it must overcome a potential energy barrier between each of them. This barrier can be provided, for example, by frictional click stops in the movable joint 22. The joint 22 is so constructed that the potential energy barrier which must be overcome each time increases in a stepwise fashion as the angle of the joint 22 increases relative to the static mount 20, as shown in Fig. 2. In Fig. 2, the stepped graph represents the increasing size of the potential energy barrier, V, as the angular displacement, *φ*, of the joint 22 is increased relative to the static mount 20 and as the angle of orientation of the array 12 away from the horizontal increases from position 1 to position 2, from position 2 to position 3, and so on.

Fig. 3 schematically shows how the light tracking apparatus 10 reacts to unequal irradiation from a light source 30. As shown in Fig. 3, the light source 30 is nearer to a right- than to a left-hand side of the light tracking apparatus 10, so that the photodetectors 14 in the array 12 which are nearer to the light source 30 at the right-hand side of the array 12 produce a larger photocurrent than the photodetectors 14 in the array 12 which are further from the light source 30 at the left-hand side of the array 12. This in turn generates a stronger magnetic field in the electromagnets 16 which are electrically connected to the photodetectors 14 at the right-hand side of the array 12 than in the electromagnets 16 which are electrically connected to the photodetectors 14 at the left-hand side of the array 12. The ferromagnetic weight 18 is therefore preferentially attracted towards the area of strongest magnetic field at the right-hand side of the array 12, and will move in that direction, as indicated by the arrows and the dashed outlines of weight 18 shown in Fig. 3.

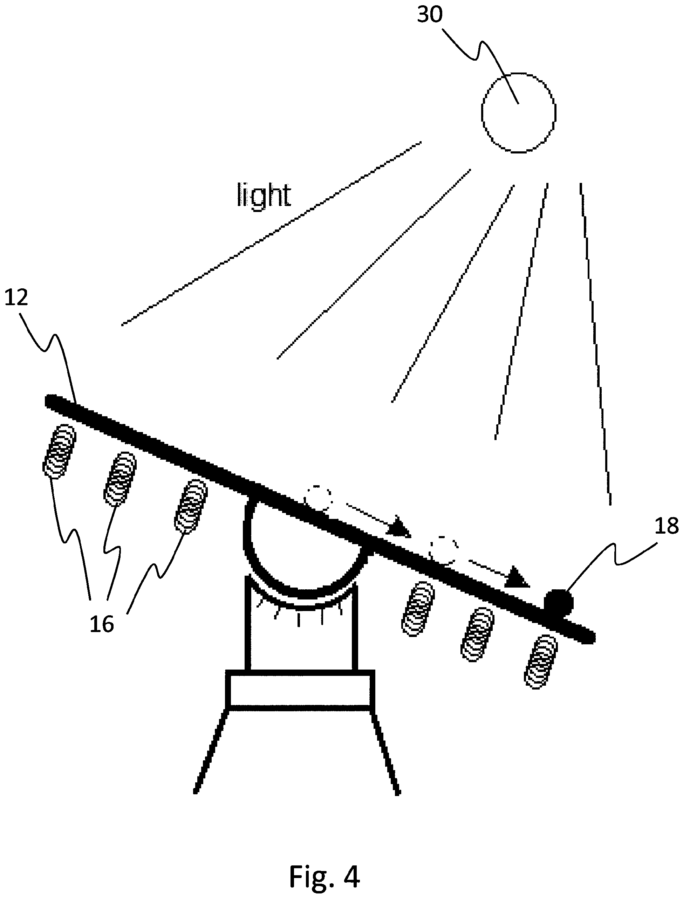

Fig. 4 schematically shows what happens as a result of this movement of the weight 18 towards the right-hand side of the array 12. The mechanical coupling of the weight 18 to the array 12 by its contact with the upper surface of the array 12 causes the weight 18 to exert a downward force on the right-hand side of the array 12. As the distance, x, of the weight 18 from its starting position shown in Fig. 3 increases, so the torque, T, exerted by the weight 18 on the joint 22 also increases linearly in proportion thereto. This is represented by the straight-line graph passing through the origin of Fig. 2. As may be seen from Fig. 2, once the weight 18 has moved sufficiently far enough from its starting position for the turning moment it exerts on the joint 22 to exceed the height of each successive step in the potential energy barrier between each of the discrete different angles of the joint 22, the array 12 is thereby caused to tilt to the right by rotation of the movable joint 22 relative to the static mount 20, but only as far as the distance, x, of the weight 18 from its starting position of Fig. 3 dictates. Thus the array 12 is prevented from tilting all the way over to one side (or the other) in the manner of a seesaw. The plurality of photodetectors 14 are thereby re-oriented towards the light source 30, until all of the subsets of photodetectors 14 produce substantially the same photocurrent as each other and the respective magnetic fields in the electromagnets 16 which are electrically connected to the subsets of photodetectors 14 are substantially equal to each other in strength.

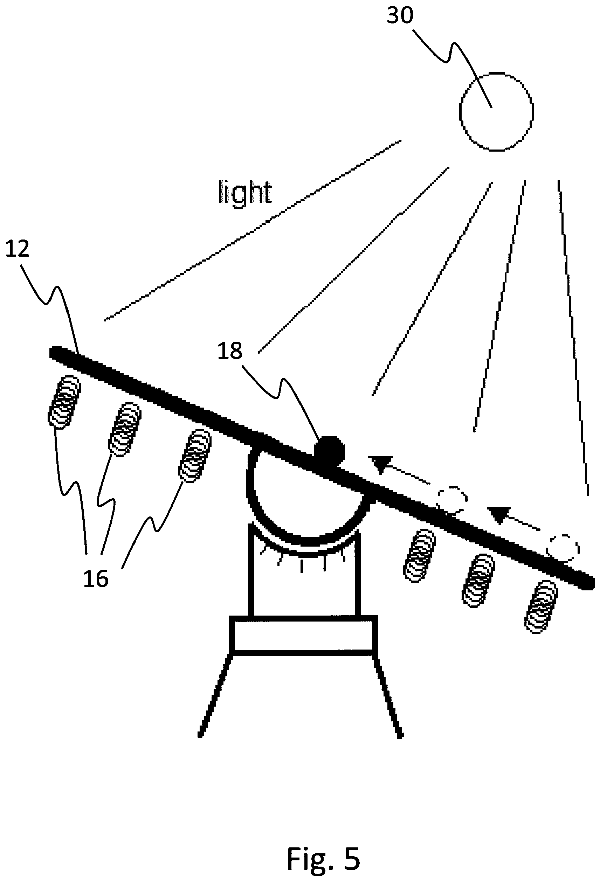

Fig. 5 schematically shows what happens if the light source 30 then begins to move from right to left. In this instance, the photodetectors 14 in the middle of the array 12 are now nearer to the light source 30 than are the photodetectors 14 at the right-hand side of the array 12, and therefore produce a larger photocurrent than the photodetectors 14 at the right-hand side of the array 12. This in turn generates a stronger magnetic field in the electromagnets 16 which are electrically connected to the photodetectors 14 in the middle of the array 12 than in the electromagnets 16 which are electrically connected to the photodetectors 14 at the right-hand side of the array 12. The weight 18 is therefore preferentially attracted towards the area of strongest magnetic field in the middle of the array 12, as is indicated by the arrows and the dashed outlines of weight 18 shown in Fig. 5, until the weight 18 returns to its starting position as shown in Fig. 3.

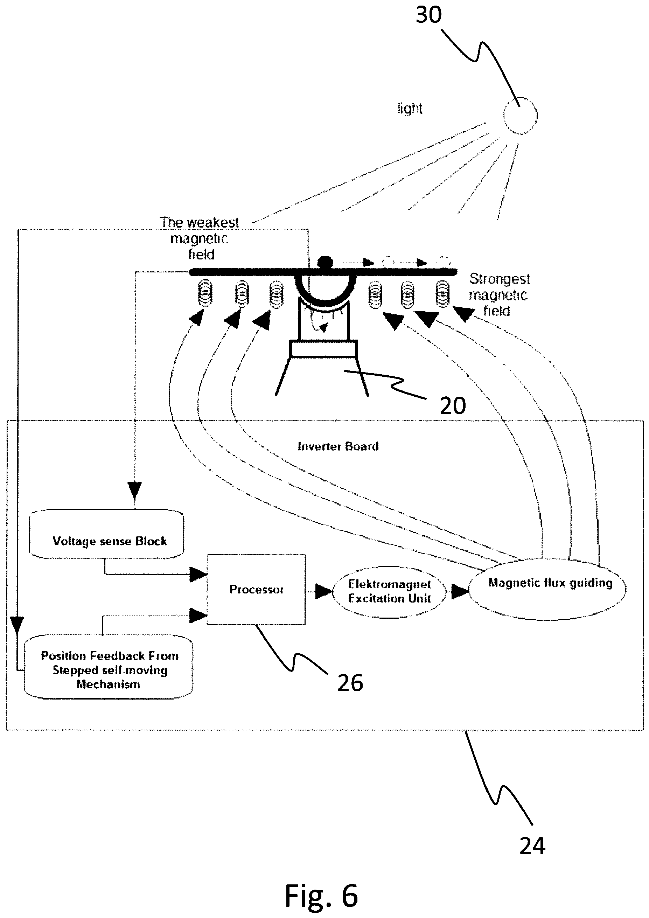

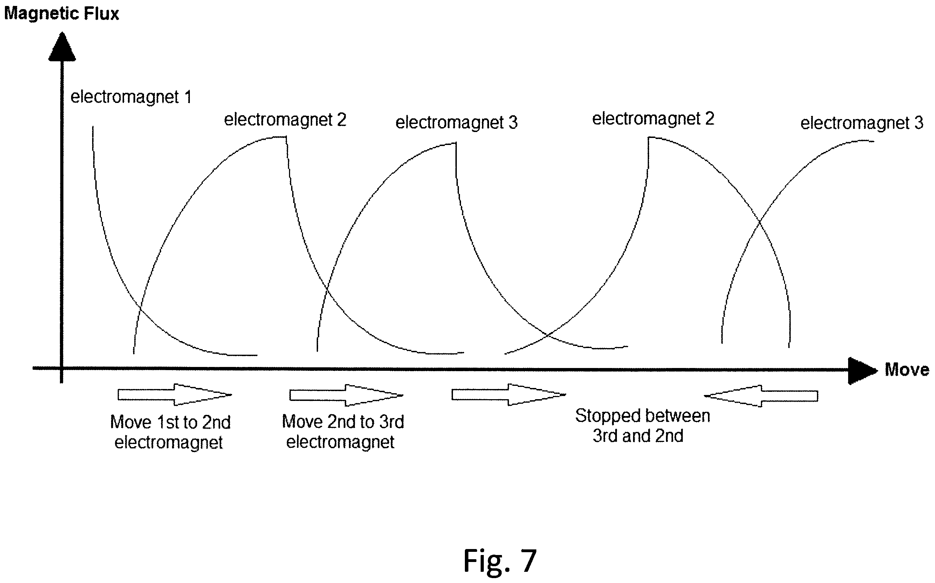

In order to help the weight 18 to move back "uphill", in other words, against the force of gravity, under the magnetic attraction of the electromagnets 16, the magnetic field generated by the electromagnets 16 is controlled by the control electronics 24, the structure and function of which will therefore now be described in greater detail with reference to Figs. 6 and 7. As may be seen from Fig. 6, the control electronics 24 comprises a processor 26. The processor 26 receives two different inputs, one of which is the photocurrents generated by each subset of the photodetectors 14 in the array 12, each corresponding to a respective one of the electromagnets 16, and the other of which gives the processor 26 feedback on the position of the stepped mechanism of the movable joint 22. The processor 26 is therefore able to compare the current orientation of the array 12 (as indicated by the angle of the joint 22) with the most desirable orientation of the array 12 (as indicated by the respective photocurrents from each subset of the photodetectors 14 in the array 12). On this basis, the processor 26 is able to redirect electrical power from the array 12 to whichever one or ones of the electromagnets 16 are required to magnetically influence the movement of the ferromagnetic weight 18 the most. This may be called preferential excitation of respective ones of the electromagnets 16.

Moreover, as will now be described with reference to the graph of Fig. 7, the processor 26 is also able to guide the ferromagnetic weight 18 from one electromagnet to another, by altering the magnetic fields of adjacent electromagnets 16 in concert with each other. As shown in Fig.7, the ferromagnetic weight 18 may be moved from a first to a second one of the electromagnets 16 by simultaneously reducing the magnetic field generated by the first one of the electromagnets 16 and increasing the magnetic field generated by the second one of the electromagnets 16. Thereafter, the weight 18 may be moved from the second to a third one of the electromagnets 16 by simultaneously decreasing the magnetic field of the second electromagnet and increasing the field of the third electromagnet, and so on. The weight 18 may also be stopped between two of the electromagnets 16 by balancing their respective magnetic fields, as shown.

Optionally, in addition to control of the electromagnets 16 by the processor 26 as just described, the array 12 may also be mildly mechanically biased towards the starting position shown in Fig. 3, for example by being spring loaded. Indeed, the physical parameters of the light-tracking apparatus 10, such as the amount of mechanical bias required, the size of the weight 18, the coefficient of friction between the weight 18 and the array 12, and the coefficient of friction of the moveable joint 22, are all carefully chosen, so as to allow the light-tracking apparatus 10 to behave as described above. However, these parameters are all design variables of the light-tracking apparatus 10 which a person of ordinary skill in the art is able to determine through experimentation, by trial and error, according to the size, shape, type and particular intended purpose of the apparatus 10.

Although not visible in Figs. 1 and 3 to 6, the movable weight 18 is constrained to move along a predetermined path. Amongst other things, this ensures that the weight 18 does not just fall off the upper surface of the array 12 when the array is tilted away from horizontal. For example, the weight 18 may slide within a tube, from which the air has been evacuated. For simple left-right tilting of the light-tracking apparatus 10 as described above in relation to Figs. 3 to 6, the predetermined path may be rectilinear. In other possible alternative embodiments, however, the predetermined path may instead be contained within a two-dimensional plane, so that the light-tracking apparatus 10 is also able to tilt in two different dimensions. In a more complex alternative embodiment, however, such as when the weight is suspended beneath the array 12, the predetermined path may instead occupy a three-dimensional space, so that the light-tracking apparatus 10 is not only able to tilt in two different dimensions, but is also height adjustable, thereby bringing it nearer to or further from the light source 30, as desired.

In order to ensure that the light-tracking apparatus 10 is not constantly in motion as a result of every tiny movement of the light source 30, which might otherwise result in undesirable and excessive mechanical wear on the light-tracking apparatus 10, the respective magnetic fields of the electromagnets 16 can each provide a respective potential energy well for the movable weight 18, which are separated from each other by a potential energy barrier. Thus, in order for the movable weight 18 to be able to move from one location to another, the weight 18 must firstly surmount this potential energy barrier. The potential energy barrier may be provided in one of several different possible ways, such as by a ridge or mechanical restriction in the predetermined path of the movable weight 18, by control of the electromagnets 16 by the processor 26, or by frictional click stops provided in the movable joint 22.

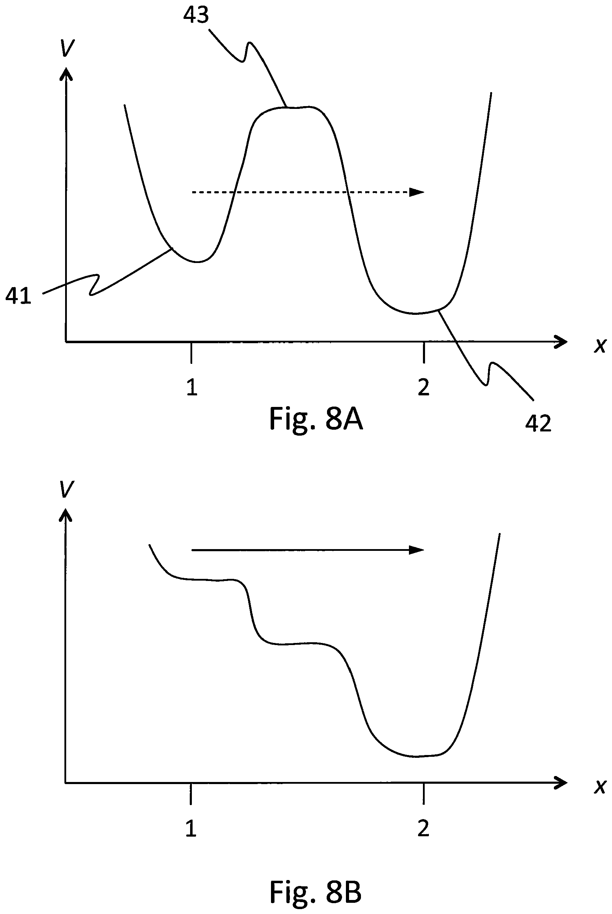

Figs. 8A and 8B are two graphs, each plotting potential energy on the y-axis or ordinate against displacement of the movable weight 18 on the x-axis or abscissa, which together illustrate this principle. In Fig. 8A, one of the electromagnets 16 provides a first potential energy well 41 at a first possible location 1 for the weight 18 and another of the electromagnets 16 provides a second potential energy well 42 at a second possible location 2 for the weight 18. The first and second potential energy well 41, 42 are separated from each other by a potential energy barrier 43. Thus, even though the second potential energy well 42 is deeper than the first potential energy well 41, the weight 18 is unable to move from location 1 to location 2 in the manner indicated in Fig. 8A by the dashed arrow. In Fig. 8B, on the other hand, the depth of the potential energy well at location 1 has changed (reduced) sufficiently that the weight 18 is now able to move from location 1 to location 2 in the manner indicated in Fig. 8B by the solid arrow, even though the depth of the potential energy well at location 2 and the height of the potential barrier have remained the same as in Fig. 8A. This therefore illustrates only one possible way in which the weight 18 may surmount the potential energy barrier, which depends only on the relative sizes of the potential energies at locations 1 and 2 and other possible locations for the weight 18 therebetween, and not on their absolute values.

In summary, therefore, the present invention provides a light-tracking apparatus at least comprising an array of photodetectors, a plurality of electromagnets and a movable weight. The electromagnets are each electrically connected to a respective subset of the photodetectors in the array and are able to produce a magnetic field from an electric current generated by the respective subset of the photodetectors to which they are connected, in response to light falling on that respective subset. The weight, which can be magnetically influenced by the electromagnets and which is preferentially movable towards one or more of them according to the relative strengths of their respective magnetic fields, is mechanically coupled to the array of photodetectors and is arranged to change an orientation of the array of photodetectors in response to its movement. Thus the array of photodetectors can be caused to track a moving light source by movement of the weight, without any need for an external source of power. The present invention also provides a corresponding method of tracking a light source. The array may be caused to turn towards or away from the light source according to the particular set-up of the light-tracking apparatus.

**Reference Numerals:**

| | | | |
|---|---|---|---|
| 10 | Light-tracking apparatus | 24 | Control electronics |
| 12 | Array of photodetectors | 26 | Processor |
| 14 | Photodetectors | 30 | Light source |
| 16 | Electromagnets | 41,42 | Potential energy wells |
| 18 | Movable weight | 43 | Potential energy barrier |
| 20 | Mount for array | x | Displacement of weight 18 |
| 22 | Movable joint | *T* | Torque exerted by weight 18 |
| | | *V* | Potential energy |

## Claims

1. A light-tracking apparatus (10), at least comprising:
an array (12) of photodetectors (14);
at least two electromagnets (16), each electrically connected to a respective subset of the photodetectors (14) in the array (12) and able to produce a magnetic field from an electric current generated by the respective subset of the photodetectors in response to light falling thereon; and
a movable weight (18), which can be magnetically influenced by the at least two electromagnets (16) and preferentially moved towards one of them according to the relative strengths of their respective magnetic fields;
wherein the movable weight (18) is mechanically coupled to the array (12) of photodetectors (14) and is arranged to change an orientation of the array of photodetectors in response to its movement.

2. A light-tracking apparatus according to claim 1, wherein the movable weight (18) comprises a ferromagnetic material.

3. A light-tracking apparatus according to claim 1 or claim 2, wherein the movable weight (18) is mechanically coupled to the array (12) of photodetectors (14) either by contact with an upper surface of the array or by being suspended beneath the array.

4. A light-tracking apparatus according to any one of the preceding claims, wherein the movable weight (18) is constrained to move along a predetermined path.

5. A light-tracking apparatus according to claim 4, wherein the predetermined path is either rectilinear or is contained within a two-dimensional plane.

6. A light-tracking apparatus according to claim 4, wherein the predetermined path occupies a three-dimensional space.

7. A light-tracking apparatus according to any one of the preceding claims, further comprising a mount (20) supporting the array (12) and connected thereto via a movable joint (22), wherein the joint (22) preferentially adopts any one of a plurality of discrete different angles relative to the mount (20), each of which angles corresponds to one of a plurality of different orientations of the array (12), and wherein the movable weight (18) can exert a variable torque, T, on the joint (22), the size of which torque determines which one of the different angles the joint adopts relative to the mount.

8. A light-tracking apparatus according to claim 7, further comprising control electronics (26) electrically connected to the joint (22) to receive therefrom an indication of the angle adopted by the joint relative to the mount (20), electrically connected to each respective subset of the photodetectors (14) in the array (12) to receive therefrom an indication of which subset of the photodetectors is generating the largest electric current in response to light falling thereon, and electrically connected to each of the electromagnets (16) to control a strength of the magnetic field generated by a respective one of the electromagnets (16) in dependence on a comparison between the indication received from the joint (22) and the indication received from each respective subset of the photodetectors (14).

9. A light-tracking apparatus according to any one of the preceding claims, wherein the respective magnetic fields of the at least two electromagnets (16) each provide a respective potential energy well for the movable weight (18) which are separated from each other by a potential energy barrier.

10. A light-tracking apparatus according to any one of the preceding claims, wherein each photodetector (14) comprises a photovoltaic cell and each subset of the photodetectors (14) in the array (12) comprises a plurality of said photodetectors electrically connected in parallel.

11. A method of tracking a light source (30), the method at least comprising:
detecting light from the light source with photodetectors (14) located in at least two different locations;
producing respective magnetic fields from a current generated by the photodetectors in each of the at least two different locations in response to light falling on the photodetectors;
magnetically influencing a movable weight (18) with the respective magnetic fields;
preferentially moving the weight (18) towards one of the respective magnetic fields according to the relative strengths of the respective magnetic fields;
mechanically coupling the movable weight (18) to the photodetectors (14); and
changing an orientation of the photodetectors (14) in response to movement of the weight.

12. A method according to claim 11, further comprising:
causing the photodetectors (14) to preferentially adopt any one of a plurality of discrete different orientations in response to movement of the weight.

13. A method according to claim 11 or claim 12, further comprising:
determining a current orientation of the photodetectors (14);
determining a desired orientation of the photodetectors (14) from the respective currents generated by the photodetectors in response to light falling thereon; and
controlling the relative strengths of the respective magnetic fields based on a comparison between the current orientation and the desired orientation of the photodetectors.

14. A method according to any one of claims 11 to 13, further comprising constraining the movable weight (18) to move along a predetermined path.

15. A method according to any one of claims 11 to 14, further comprising separating the respective magnetic fields by a potential energy barrier for the movable weight (18).
